# EUROPEAN PATENT SPECIFICATION

(11) **EP 0 642 118 B1**
(45) Date of publication and mention of the grant of the patent: **01.03.2000**
(21) Application number: 94113018.9
(22) Date of filing: 20.08.1994
(51) Int. Cl.: G10L 15/06, G10L 15/22

(54) **Automatic system for guided acquistion of telephone line speech signals**
Automatisches System für geführten Zugriff auf Sprachsignale von Telefonlinien
Système automatique pour l'obtention guidée de signaux de parole sur une ligne téléphonique

(30) Priority: 06.09.1993 IT MI931906
(43) Date of publication of application: 08.03.1995
(73) Proprietor: ALCATEL, 75008 Paris (FR)
(72) Inventor: De Santis, Gerardo, I-84100 Salerno (IT); Riccio, Antonello, I-84132 Salerno (IT); Rigosi, Francesca, I-83024 Monteforte Irpino (AV) (IT)
(74) Representative: Knecht, Ulrich Karl, Dipl.-Ing.

(56) References cited:
- DE-A- 3 608 239
- GB-A- 2 165 969
- US-A- 4 907 274
- US-A- 5 125 022

## Description

The present invention relates to an automatic system for guided acquisition of telephone line speech signals.

In the field of the speech processing, in particular of the automatic recognition, it is very important to have high-quality databases available.

The generation of such databases occurs through long and repeated recording operations, often carried out in the same conditions as recognition will have to take place later on. In general a team of speakers is chosen and each speaker utters at least once the speech elements corresponding to a predetermined vocabulary (generally words or, less frequently, syllables); the speech signals corresponding to such utterances are acquired and recorded, often on special recorders called DAT (Digital Audio Tape).

From US patent No. 5,125,022 a method for recognizing alphanumeric strings is disclosed, that comprises a processing system with a processor, an interface to telephone network and a database for storing a predetermined set of alphanumeric strings. In operation the system prompts the caller to speak characters of a string. Such a method has a very limited application, since it is intended to detect a code entry, so that that acts only on single characters.

Such recognition be realized on speech signals from telephone lines, a method of getting the speakers to utter such speech elements consists in calling a telephone subscriber up and asking him to utter the words that an operator utters in advance one at a time.

The object of the present invention is to take such recording operation easier.

This object is achieved through the automatic system for guided acquisition of telephone line speech signals as set forth in claim 1; further advantageous aspects of the present invention are set forth in the subclaims.

By automating the acquisition process under control of a unique control unit the work of the operator is made extremely easier.

The present invention will result better from the following description taken in conjunction with the sole attached drawing that represents a conceptual block diagram of the invention.

The automatic system for guided acquisition of speech signals from a telephone line TR, in accordance with the present invention, comprises:
a) first storage means M1 designed to contain a plurality of operator speech messages and provided with a message output and with a control input for the selection and emission of the speech messages from said output,
b) second storage means M2 designed to store a plurality of user speech signals and provided with a signal input and a control input for storing speech signals,
c) a telephone interface INT electrically connected with the telephone line TR, receiving at its input speech messages from said first speech message storage means M1, outputting speech signals to said second storage means M2 and having a control input for establishing ringings, and
d) a control unit CU connected with said control inputs and designed to control the operation of the system.

For clarity, the operator speech messages are substantially the words of the vocabulary that the user will have to utter.

Clearly, there are in practice several possibilities of realizing the various components of the system just listed.

All the system could be, e.g., realized by only one personal computer equipped with a signal acquisition, generation and digital processing card; or by a personal computer suitably interfaced with a DAT (Digital Audio Tape) recorder.

An automatic speech synthesizer SY can be connected with the message output of the storage means M1; in this circumstance the plurality of operator speech messages will be stored into means M1 in a textual form.

In a more simple case, in which there is not the synthesizer SY, the plurality of operator speech messages can be advantageously stored in the form of a plurality of synthetic speech signals.

It may be useful that an operator TL is electrically connected with the telephone interface INT to allow the operator to talk with the called user before starting the acquisition of the speech signals; in addition, such telephone TL may also be used for establishing calls.

If there is a telephone TL, the control input of the telephone interface INT is further designed to control the connection of the telephone line TR to the telephone itself, for instance in order to disable it during acquisition.

If the telephone TL is not provided with a device for establishing ringings or, anyway, if it is preferred not to use it, it may be contemplated that the control unit CU provides the telephone interface INT with information about the user to be called up: the dial signallings or tones to be sent directly over the telephone line TR; this can be particularly advantageous if the system has to work in a totally autonomous manner without the intervention of an operator; then it will be useful to provide the unit CU with a list of telephone numbers of users to be called up.

For reporting to control unit CU the start and the end of acquisition operations it may be contemplated, e.g., to use a push-button BT connected with the unit itself; in many cases unit CU will be provided with several push-buttons for carrying out other functions.

Only speech signals from the called user can be stored in sequence into storage means M2 or, for a more simple realization, it can be seen that storage means M2 are capable of storing all speech signals of a ringing.

Interface INT can be, e.g., formed by a two-to-four wire telephone converter HY and by a controlled switch SW. Converter HY is electrically connected, from the four-wire side, at the input, with means M1 or with synthesizer SY depending on the circumstances, and at the output, with means M2, and from the two-wire side, with switch SW; switch SW receives at its input the two-wire telephone line TR and connects it to converter HY or to telephone TL, depending on the control signals from unit CU.

The operation of the system in accordance with the present invention will now be described.

Depending on the control unit CU used, the operation can be a little different.

In a very simple case, after having established a ringing, an operator, through the telephone TL, explains the situation to the called user and then starts acquisition through push-button BT.

Unit CU detects pressure of push-button BT and at the same time transmits:
- a control signal to means M1 to start utterance of the vocabulary words, one at a time and in a suitably broken manner to give the called user time to repeat them,
- a control signal to means M2 to start storing, and
- a control signal to interface INT to disconnect line TR from the telephone TL and connect it, e.g. through converter HY, with means M1 and M2.

In this case, means M2 store both speech signals corresponding to speech messages stored into means M1 and speech signals emitted by the called user.

The fact that the called user receives operator messages, i.e. the words of the vocabulary, synthetic and hence unnatural, is advantageous because the copy effect of the original operator message prosody will be avoided.

In a more complicated case, the operator provides in advance the unit CU with a list of telephone subscribers to be called up for acquisition, and also stores at least one performance speech message into means M1 and then starts the acquisition.

Unit CU sends dial signalling to interface INT for establishing a ringing with the first telephone subscriber of the list and the latter (INT) in turn sends them over the line TR; as soon as the subscriber lifts the handset, unit CU sends the performance speech message from means M1 to interface INT which in turn sends it over line TR; if the subscriber replaces the handset, thus indicating its unwillingness to cooperate, the acquisition process goes on with the second subscriber in the list; unit CU then checks the sending of the first word of the vocabulary and, as soon as the synthetic utterance of the same is terminated, it activates means M2 for storing the corresponding utterance of the subscriber.

Such operations are repeated for all the words of the vocabulary and for all the listed subscribers.

Naturally the above description both of the system and of its operation is given by way of an example only and several variants can be found by those skilled in the art.

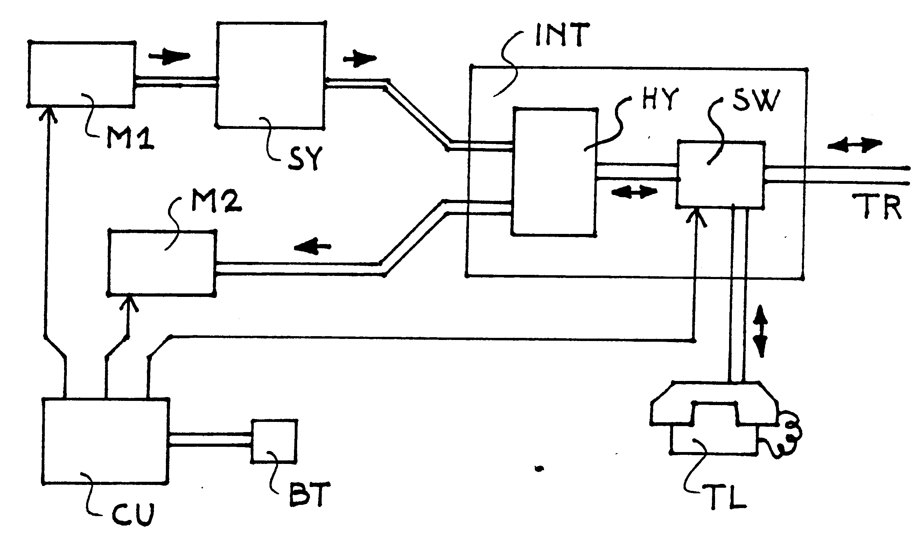

## Claims

1. Automatic system for guided acquisition from a telephone line (TR) of speech signals, corresponding to a predetermined vocabulary to be used in speech recognition databases, comprising:
a) first storage means (M1) designed to contain a plurality of operator speech messages, said messages asking called telephone subscribers to utter elements of said predetermined vocabulary, and provided with a message output and a control input for the selection and the emission of speech message from said output,
b) second storage means (M2) designed to store a plurality of user speech signals, recorded from the subscriber's answer utterances to said messages, and provided with a signal input and a control input for storing speech signals,
c) a telephone interface (INT) electrically connected to said telephone-line (TR), receiving at its input speech messages from said first storage means (M1), outputting speech signals to said second storage means (M2), and having a control input for establishing calls to said subscribers, and
d) a control unit (CU) connected with said control inputs and designed to control the operation of the system.

2. System according to claim 1, characterized in that said plurality of operator speech messages is stored into said first storage means (M1) in the form of a plurality of synthetic speech signals, and said message output of said first storage means (M1) is connected to an automatic speech synthesizer (SY).

3. System according to claim 1, characterized in that said telephone interface (INT) is electrically connected with an operator telephone (TL) and in that said control input of said telephone interface (INT) is further designed to control the connection of said telephone line (TR) with said operator line (TL).

4. System according to claim 1, characterized in that said control unit (CU) transmits to said telephone interface (INT) information about the subscribers to be called.

5. System according to claim 1, characterized in that said second storage means (M2) are designed to store all the speech signals obtained from said calls.

## Patentansprüche

1. Automatisches System für eine geführte Erfassung von Sprachsignalen über eine Telefonleitung (TR), entsprechend einem in Spracherkennungs-Datenbanken zu verwendenden vorbestimmten Vokabular, aufweisend:
a) eine erste Speichereinrichtung (M1), die ausgelegt ist, eine Mehrzahl von Vermittlungs-Sprachnachrichten zu enthalten, wobei diese Nachrichten angerufene Fernsprechteilnehmer auffordern, Elemente aus dem vorbestimmten Vokabular zu sprechen, und die mit einem Nachrichtenausgang und einem Steuereingang zum Auswählen und Abgeben von Sprachnachrichten über den Ausgang ausgerüstet ist,
b) eine zweite Speichereinrichtung (M2), die ausgelegt ist, eine Mehrzahl von Fernsprechteilnehmer-Sprachsignalen zu speichern, welche von den als Antwort auf diese Nachrichten kommenden Sprachäußerungen des Teilnehmers aufgezeichnet wurden, und mit einem Signaleingang und mit einem Steuereingang zum Speichern von Sprachsignalen versehen ist,
c) eine Telefon-Schnittstelle (INT), die mit der Telefonleitung (TR) elektrisch verbunden ist, an ihrem Eingang Sprachnachrichten von der ersten Speichereinrichtung (M1) empfängt, Sprachsignale an die zweite Speichereinrichtung (M2) ausgibt, und einen Steuereingang zur Herstellung von telefonischen Verbindungen zu den Teilnehmern besitzt, und Steuereingängen verbunden ist und dazu ausgelegt ist, den Betrieb des Systems zu steuern.

2. System nach Anspruch 1, dadurch gekennzeichnet, daß die Mehrzahl von Vermittlungs-Sprachnachrichten in der ersten Speichereinrichtung (M1) in Form einer Mehrzahl von synthetischen Sprachsignalen gespeichert ist, und der Nachrichtenausgang der ersten Speichereinrichtung (M1) mit einem automatischen Sprachsynthesizer (SY) verbunden ist.

3. System nach Anspruch 1, dadurch gekennzeichnet, daß die Telefonschnittstelle (INT) mit einem Vermittlungstelefon (TL) elektrisch verbunden ist, und daß der Steuereingang der Telefonschnittstelle (INT) weiter ausgelegt ist, die Verbindung der Telefonleitung (TR) mit der Vermittlungsleitung (TL) zu steuern.

4. System nach Anspruch 1, dadurch gekennzeichnet, daß die Steuereinheit (CU) an die Telefonschnittstelle (INT) Information über die anzurufenden Teilnehmer überträgt.

5. System nach Anspruch 1, dadurch gekennzeichnet, daß die zweite Speichereinrichtung (M2) ausgelegt ist, um alle aus den Telefonanrufen erhaltenen Sprachsignale zu speichern.

## Revendications

1. Système automatique pour l'obtention guidée depuis une ligne téléphonique (TR), de signaux de parole, correspondant à un vocabulaire prédéterminé à utiliser dans des bases de données de reconnaissance vocale, comprenant :
a) des premiers moyens de mémoire (M1) conçus pour contenir une pluralité de messages de parole d'opérateur, lesdits messages demandant aux abonnés au téléphone de prononcer des éléments dudit vocabulaire prédéterminé, et dotés d'une sortie de message et d'une entrée de message pour sélectionner et émettre un message de parole à partir de ladite sortie,
b) des deuxièmes moyens de stockage (M2) conçus pour mémoriser une pluralité de signaux de parole d'utilisateur enregistrés à partir des énoncés de l'abonné en réponse auxdits messages, et dotés d'une entrée de signal et d'une entrée de commande pour mémoriser les signaux de parole,
c) une interface téléphonique (INT) connectée électriquement à ladite ligne téléphonique (TR) recevant à son entrée des messages de parole provenant desdits premiers moyens de mémoire (M1), délivrant des signaux de parole auxdits deuxièmes moyens de mémoire (M2) et ayant une entrée de commande pour générer des appels vers lesdits abonnés, et
d) une unité de commande (CU) connectée auxdites entrées de commande et conçue pour commander le fonctionnement du système.

2. Système selon la revendication 1, caractérisé en ce que ladite pluralité de messages de parole est stockée dans lesdits premiers moyens de mémoire (M1) sous la forme d'une pluralité de signaux de parole synthétique, et en ce que ladite sortie de message desdits premiers moyens de mémoire (M1) est reliée à un synthétiseur vocal automatique (SY).

3. Système selon la revendication 1, caractérisé en ce que ladite interface téléphonique (INT) est connectée électriquement à un téléphone d'opérateur (TL) et en ce que ladite entrée de commande de ladite interface téléphonique (INT) est en outre conçue pour commander la connexion de ladite ligne téléphonique (TR) avec ladite ligne d'opérateur (TL).

4. Système selon la revendication 1, caractérisé en ce que ladite unité de commande (CU) transmet à ladite interface téléphonique (INT) des informations sur les abonnés à appeler.

5. Système selon la revendication 1, caractérisé en ce que lesdits deuxièmes moyens de mémoire (M2) sont conçus pour mémoriser tous les signaux de parole obtenus à partir desdits appels.
